# EUROPÄISCHE PATENTSCHRIFT

(11) **EP 3 161 464 B1**
(45) Veröffentlichungstag und Bekanntmachung des Hinweises auf die Patenterteilung: **21.10.2020**
(21) Anmeldenummer: 15722999.8
(22) Anmeldetag: 08.05.2015
(51) Int. Cl.: G01N 25/20, B23K 26/00, B23K 26/03, C21D 1/09, C21D 1/55, G01N 21/84

(54) **VERFAHREN ZUM HERSTELLEN EINES BAUTEILELEMENTS**
METHOD FOR PRODUCING A COMPONENT ELEMENT
PROCÉDÉ DE PRODUCTION D'UN COMPOSANT

(30) Priorität: 27.06.2014 DE 102014212402
(43) Veröffentlichungstag der Anmeldung: 03.05.2017
(73) Patentinhaber: Robert Bosch GmbH, 70442 Stuttgart (DE)
(72) Erfinder: STRAEHLE, Jochen, 71287 Weissach (DE); BUECHNER, Katrin, 70329 Stuttgart (DE)
(86) Internationale Anmeldenummer: PCT/EP2015/060177
(87) Internationale Veröffentlichungsnummer: WO 2015/197249

(56) Entgegenhaltungen:
- EP-A1- 0 822 027
- WO-A1-81/03704
- WO-A1-89/01385
- DE-A1- 3 739 862
- DE-A1- 3 905 551
- DE-A1- 19 852 302
- DE-A1-102011 086 958
- DE-C1- 19 822 855
- US-A- 3 043 956
- US-A- 4 551 030
- US-A- 5 196 672

## Beschreibung

Die Erfindung betrifft ein Verfahren zum Herstellen eines Bauteilelements, insbesondere für ein Kraftstoffeinspritzsystem, und ferner eine Vorrichtung, die zur Durchführung eines derartigen Verfahrens geeignet ist.

### Stand der Technik

Bei Bauteilelementen, die zusammen eine Baugruppe bilden und von denen wenigstens ein Bauteilelement beweglich ausgebildet ist, wird durch den Bewegungskontakt der Bauteilelemente untereinander ein Verschleiß an den jeweiligen Kontaktzonen der Bauteilelemente verursacht. So wird beispielsweise bei einem Magnetinjektor, bei dem ein zum Abdichten eines Innenraums des Magnetinjektors vorgesehener und dazu in einer Bohrung aufgenommener Stift innerhalb einer bestimmten Strecke freibeweglich ausgebildet ist, dieser Stift bei einem Schaltvorgang des Magnetinjektors aufgrund des in der Bohrung anstehenden Kraftstoffdrucks gegen eine Metallplatte anschlagen, was bei sich periodisch oder nichtperiodisch wiederholenden Schaltvorgängen mit der Zeit zu einem abrasiven Verschleiß sowohl an dem Ende des Stifts als auch an der Metallplatte führt. Der Stift weist jedoch wegen seiner freibeweglichen Ausbildung nicht nur einen einzigen Bewegungsfreiheitsgrad auf, sondern kann während eines Schaltvorgangs neben einer axialen Bewegung gleichzeitig auch eine Drehbewegung ausführen, was zu einem erhöhten Verschleiß nicht nur an dem Stift, sondern auch an der Metallplatte führt.

Unbefriedigend bei bekannten Herstellungsverfahren ist, dass ein danach gefertigtes Bauteilelement typischerweise uniforme Materialeigenschaften aufweist, so dass Bereiche bzw. Zonen, die einer erhöhten Beanspruchung ausgesetzt sind, schneller verschleißen, wodurch die Lebensdauer eines solchen Bauteilelements herabgesetzt ist.

Die Druckschrift DE 3905551 A1 offenbart eine Oberflächenbehandlung von metallischen Werkstücken, wobei ein Laserstrahl in seiner Intensität durch Modulation verändert, und die von einem Sensor berührungslos abgetastete Temperatur des bestrahlten Werkstücks als Regelgröße benutzt wird.

### Vorteile der Erfindung

Die Erfindung wird in den Ansprüchen 1 und 14 definiert.

Das Verfahren mit den Merkmalen des Patentanspruchs 1 hat den Vorteil, dass das mikroskopische Gefüge eines Bauteilelements im Bereich einer bestimmten Zone definiert und reproduzierbar modifiziert werden kann, wodurch es möglich ist, die Materialeigenschaften in einer derartigen Zone an die im späteren Betrieb im Zusammenspiel mit anderen Bauteilelementen bzw. Komponenten zu erwartende mechanische Beanspruchung soweit anzupassen, um den Verschleiß dort deutlich zu reduzieren gegenüber herkömmlich gefertigten Bauteilelementen. Dazu wird die Zone selektiv einer Strahlung ausgesetzt, um eine Strukturveränderung der Zone zu erzielen, worauf der Prozesszustand der Zone messtechnisch erfasst wird, indem mit modulierter Strahlung die Zone bestrahlt wird und daraufhin von der Zone abgegebene thermische Strahlung phasenempfindlich detektiert wird, wobei eine Phasenbeziehung zwischen eingestrahlter modulierter Strahlung und detektierter thermischer Strahlung als Maß für den Prozesszustand der Zone ermittelt wird. Im Prinzip manifestiert sich in der von der Zone abgegebenen und dann detektierten Strahlung und mithin in der daraus ermittelten Phasenbeziehung das Antwortverhalten der Zone in Bezug auf die einfallende modulierte Strahlung, da dieses Antwortverhalten abhängig ist vom Grad der zuvor erzielten mikroskopischen Gefügeänderung in der Zone. Vorteilhaft kann dadurch der Prozesszustand bzw. der Fortschritt der durch die bereits erzielten Gefügeänderung in der Zone prozessmesstechnisch überwacht bzw. kontrolliert werden. Das erfindungsgemäße Verfahren eignet sich mithin auch zur Qualitätskontrolle.

Weitere vorteilhafte Weiterbildungen und Ausgestaltungen der Erfindung ergeben sich durch die in den Unteransprüchen aufgeführten Maßnahmen.

Gemäß einer bevorzugten Weiterbildung der Erfindung wird die Modulationsfrequenz in diskreten Schritten innerhalb eines vorbestimmten Modulationsfrequenzbereichs verändert. Dabei wird für die jeweils eingestellte bzw. gewählte Modulationsfrequenz, mit welcher die zur prozessmesstechnischen Verfahrenskontrolle dienende Strahlung in ihrer Intensität moduliert wird, die jeweils zugehörige Phasenbeziehung ermittelt. Die modulierte Strahlung wird also in einem vorbestimmten Modulationsfrequenzbereich verändert, indem die Intensität der Strahlung nacheinander mit jeweils einer Modulationsfrequenz moduliert wird, um bei jeder Modulationsfrequenz eine Phasendifferenz zwischen einfallender modulierter Strahlung und von der Zone abgegebener thermischer Strahlung in Abhängigkeit von der jeweils eingestellten Modulationsfrequenz zu ermitteln. Der Gesamtverlauf der einzelnen Phasenbeziehungen dient als Maßstab für den Fortschritt des Herstellungsprozesses bzw. als Maßstab für die bereits erzielte Gefügeänderung in der Zone.

Eine besonders gute messtechnische Performance und somit prozessmesstechnische Kontrolle lässt sich erzielen, wenn der vorbestimmte Modulationsfrequenzbereich so gewählt bzw. eingestellt wird, dass dieser etwa zwischen 1 Hz bis 40 kHz liegt.

Eine Weiterbildung der Erfindung besteht darin, dass die der Strukturveränderung dienende Strahlung für eine vorbestimmte Zeitdauer aufrechterhalten wird und darauf eine Abkühlphase von vorbestimmter Zeitdauer erfolgt. Dabei kann nach einer vorteilhaften Ausgestaltung der Erfindung während der Abkühlphase die Leistung der zur Strukturveränderung dienenden Strahlung langsam abgeschwächt werden, um ein unerwünschtes Abschrecken der bestrahlten Zone zu vermeiden. Optimale Ergebnisse lassen sich erzielen, wenn die vorbestimmte Zeitdauer der Abkühlphase im Bereich zwischen etwa 2 bis 5 Minuten liegt. Nach Ende der Abkühlphase wird dann die messtechnische Erfassung der Strukturveränderung durchgeführt. Gemäß einer Ausführungsvariante kann die messtechnische Erfassung der Strukturveränderung während der Einwirkungsdauer der strukturverändernden Strahlung durchgeführt werden. Vorteilhaft ist dadurch die Strukturveränderung der Zone und mithin der Prozessfortschritt "online" erfassbar.

Indem für die strukturverändernde Strahlung und für die modulierte Strahlung Laserstrahlung eingesetzt wird, ist das erfindungsgemäße Verfahren besonders kostengünstig realisierbar, da ansonsten erforderliche Mittel zur Strahlkollimierung entfallen können. Eine vorteilhafte Ausgestaltung des erfindungsgemäßen Verfahrens, mit sich eine einfache Strahljustage erzielen lässt, besteht darin, dass Laserstrahlung im sichtbaren Wellenlängenbereich verwendet wird.

Eine bevorzugte Ausgestaltung des erfindungsgemäßen Verfahrens besteht darin, dass die zur Strukturveränderung dienende Strahlung mit einer konstanten Intensität abgestrahlt wird, um bei hoher Leistung eine möglichst große Wärme auf der Oberfläche der bestrahlten Zone zu erzeugen. Alternativ dazu kann die zur Strukturveränderung dienende Strahlung gepulst bzw. moduliert abgestrahlt werden, wobei jedoch die gewählte Pulsfrequenz die Eindringtiefe der Strahlung in die Zone bestimmt. Je höher dabei die Pulsfrequenz gewählt wird, desto oberflächennaher wird die Zone des Bauteilelements durch die gepulste Strahlung erwärmt bzw. erhitzt.

Eine weitere vorteilhafte Weiterbildung der Erfindung kann darin bestehen, dass das Bauteilelement zumindest während der Behandlung durch die strukturverändernde Strahlung einer sauerstoffarmen Atmosphäre ausgesetzt wird, da sich bei dafür charakteristischen Sauerstoff-Partialdrücken im Bereich zwischen 10⁻⁶ und 10⁻³ bar verschleißminderndes Eisenoxid auf der Oberfläche der erfindungsgemäß bestrahlten Zone ausbilden kann.

Die zum Durchführen des erfindungsgemäßen Verfahrens bestimmte Vorrichtung umfasst Mittel zum Abstrahlen einer strukturverändernden Strahlung, Mittel zum Abstrahlen einer zum Messen dienenden modulierten Strahlung, Detektionsmittel, um selektiv von einer Zone des Bauteilelements abgegebene thermische Strahlung in Reaktion auf moduliert einfallende Strahlung phasenempfindlich zu detektieren, und Auswertemittel zum Ermitteln einer Phasenbeziehung zwischen moduliert eingestrahlter Strahlung und detektierter thermischer Strahlung als Maß für den Prozesszustand der Zone. Die Detektionsmittel umfassen einen infrarotempfindlichen Detektor, um von dem Bauteilelement abgegebene thermische Strahlung im langwelligen Spektralbereich zu erfassen, und ferner einen Lock-In-Verstärker, der dem infrarotempfindlichen Detektor nachgeschaltet ist, um dessen Ausgangssignale im Vergleich zur modulierten Strahlung phasenempfindlich zu verarbeiten und auszuwerten. Die modulierte Strahlung dient dem Lock-In-Verstärker als Referenzsignal. Gemäß einer vorteilhaften und bevorzugten Ausführungsform der Erfindung sind die Mittel zum Abstrahlen einer strukturverändernden Strahlung und/oder die Mittel zum Abstrahlen einer zum Messen dienenden Strahlung als Laser, vorzugsweise als Laserdiode, ausgebildet. Bevorzugt ist eine einzige Laserdiode vorgesehen, die sowohl zum Abstrahlen einer strukturverändernden Strahlung als auch zum Abstrahlen einer zum Messen dienenden modulierten Strahlung dient. Dadurch können an sich unterschiedliche Funktionen, nämlich die Funktion der strukturverändernden Strahlung und die Funktion der auf die messtechnische Kontrolle gerichteten Strahlung von einer einzigen Strahlungsquelle, vorzugsweise einer Laserdiode, wahrgenommen werden, indem die Laserdiode im ersten Fall mit hoher Leistung und im zweiten Fall mit reduzierter Leistung und moduliert betrieben wird. Die dafür erforderlichen Modulationsmittel können als Funktionsgenerator ausgebildet sein, der ausgangsseitig an die Laserdiode elektrisch angeschlossen ist und deren Emissionsintensität moduliert. Gemäß einer weiterbildenden Maßnahme kann eine Maske vorgesehen sein, die zwischen Bauteilelement und einer zum Abstrahlen der strukturverändernden Strahlung vorgesehenen Strahlungsquelle angeordnet ist und wenigstens einen die von der Strahlungsquelle emittierte Strahlung transmittierenden Bereich und wenigstens einen die Strahlung sperrenden Bereich aufweist. Dadurch ist es möglich, mehrere "weiche" Zonen auf der Oberfläche eines Bauteilelements zugleich auszubilden, wenn eine entsprechende Anzahl von transmittierenden Bereichen in der Maske vorgesehen sind. Zweckmäßigerweise sind Mittel zum Kühlen des Bauteilelements vorgesehen, um die physikalische Wirkung der einfallenden strukturverändernden Strahlung auf die bestrahlte Zone zu begrenzen.

### Zeichnungen

Ausführungsbeispiele der Erfindung sind in der nachfolgenden Beschreibung und in den beigefügten Zeichnungen näher erläutert. Letztere zeigen in schematisch gehaltenen Ansichten:
Fig. 1 eine erfindungsgemäße Vorrichtung, wobei ein als Stift ausgebildetes Werkstück in einem als Halterung dienenden Backenfutter eingespannt ist und mit seinem herausragenden Ende einem mit hoher Leistung einfallenden Strahlung ausgesetzt ist, während Detektionsmittel dazu dienen, von dem Ende des Werkstücks abgegebene thermische Strahlung, die in Reaktion auf eine Messstrahlung erfolgt, zu erfassen,
Fig. 2 ein Flussdiagramm mit den wesentlichen Verfahrensschritten des erfindungsgemäßen Verfahrens zum Herstellen eines Bauteilelements,
Fig. 3 ein Schaubild, das bei einem unbehandelten stiftförmigen Werkstück den Verlauf von dessen Härte gegenüber seiner axialen Erstreckung vor Durchführung des erfindungsgemäßen Verfahrens darstellt,
Fig. 4 ein Schaubild, das bei einem stiftförmigen Werkstück den Verlauf von dessen Härte gegenüber seiner axialen Erstreckung nach Durchführung des erfindungsgemäßen Verfahrens darstellt,
Fig. 5 ein Schaubild, bei welchem anhand von drei Messkurven die jeweilige Phasenbeziehung zwischen auf eine Zone eines Werkstücks moduliert einfallendem Messlicht und in Reaktion darauf von der Zone rückgestrahlter thermischer Strahlung als Funktion einer jeweils zur Modulation des Messlichts eingestellten Modulationsfrequenz aufgetragen ist, wobei die Messkurven den jeweiligen Prozesszustand einer zuvor unterschiedlich lang behandelten bzw. erhitzten Zone des Werkstücks dokumentieren,
Fig. 6 eine perspektivische Ansicht eines stiftförmigen Werkstücks, bei dem strukturveränderte Zonen durch selektiv einwirkende Laserstrahlung gemäß dem erfindungsgemäßen Verfahren ausgebildet sind,
Fig. 7 eine perspektivische Ansicht einer Metallplatte als Werkstück mit darüber angeordneter Maske für die örtlich selektive Transmission einfallender Laserstrahlung, und
Fig. 8 eine Draufsicht auf die Metallplatte von Fig. 6 nach der Laserbestrahlung gemäß dem erfindungsgemäßen Verfahren.

### Beschreibung der Ausführungsformen

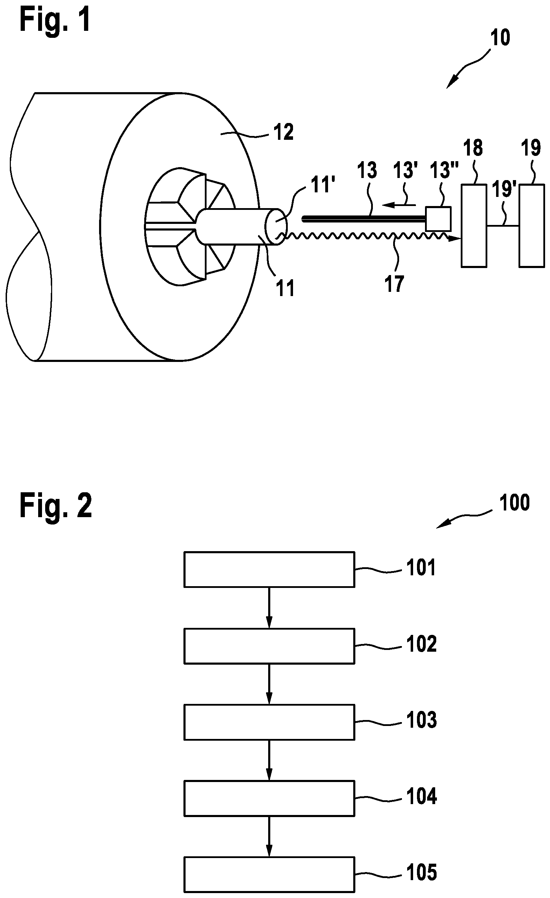

Fig. 1 zeigt eine Vorrichtung 10, bei welcher ein Stift 11 als zu bearbeitendes Werkstück bzw. Bauteil in einer Halterung 12, die im Ausführungsbeispiel als Backenfutter ausgebildet ist, ortsfest eingespannt ist, und ein Laserstrahlenbündel 13, das von einer Laserlichtquelle 13" emittiert wird, in Strahlrichtung 13' auf das aus der Halterung 12 herausragende stirnseitige Ende 11' des Stifts 11 fokussiert einstrahlt. Durch die von dem Laserstrahlenbündel 13 dort erzeugte Strahlungswärme wird diese Zone 11' selektiv erwärmt bzw. erhitzt, wodurch eine Änderung des mikroskopischen Gefüges innerhalb der Zone erzielt wird. Dabei hat die Halterung 12 noch eine Kühlfunktion, um überschüssig eingestrahlte Energie vom Bauteilelement abzuführen, so dass die unbestrahlten Bereiche, die an die zu modifizierende Zone angrenzen, ausreichend gekühlt und mithin weitgehend unverändert bleiben; überschüssig erzeugte Wärme kann somit über das Backenfutter abfließen. Im Ausführungsbeispiel ist die Laserlichtquelle 13" als Laserdiode ausgebildet und wird während der selektiven Erwärmung bzw. Erhitzung der Zone 11' bevorzugt im "continuous-wave"-Modus betrieben, d.h. die Laserlichtquelle gibt eine kontinuierliche Leistung konstanter Intensität ab. Alternativ kann die Laserlichtquelle jedoch auch gepulst bzw. moduliert betrieben werden. Um die mikroskopische Gefügeänderung bzw. den Zustand der Zone 11' messtechnisch zu erfassen, wird nach einer Abkühlphase die Laserlichtquelle 13" mit nunmehr deutlich reduzierter Leistung und ausschließlich moduliert betrieben, so dass ein moduliertes Laserstrahlenbündel als Messlicht auf die Zone 11' einstrahlt. Die daraufhin von der Zone 11' als Reaktion auf das modulierte Messlicht abgegebene thermische Strahlung 17 wird von einem Infrarot-Detektor 18 erfasst, welcher typischerweise etwa koaxial zur Laserlichtquelle 13" und zu dem von ihr emittierten Laserstrahlenbündel 13 ausgerichtet bzw. angeordnet ist. Ein Lock-In-Verstärker 19 ist dem Infrarot-Detektor 18 über eine Signalleitung 19' nachgeschaltet und verarbeitet dessen Ausgangssignal phasenempfindlich gegenüber einem Referenzsignal, wobei als Referenzsignal die modulierte Intensität der Laserlichtquelle an einem der Eingänge des Lock-In-Verstärkers 19 anliegt. Anhand des dann vom Lock-In-Verstärker 19 gelieferten Ausgangssignals ist eine Phasenbeziehung zwischen der von der Zone 11' abgegebenen thermischen Strahlung und der auf die Zone 11' einfallenden Strahlung ermittelbar. Diese Phasenbeziehung dient als Maß für den Prozesszustand der Zone 11' und mithin für den Fortschritt der Gefügeänderung in dieser Zone. Zur Auswertung der vom Lock-In-Verstärker gelieferten Ausgangssignale dient eine - nicht dargestellte - Recheneinheit. Ferner umfasst die Vorrichtung 10 einen - nicht dargestellten - Funktionsgenerator, der ausgangsseitig an die Laserlichtquelle 13" elektrisch angeschlossen ist und zur Modulation der Laserlichtquelle dient. Indem der Funktionsgenerator im "Sweep"-Modus betrieben wird, kann die Modulation der Laserlichtquelle bzw. deren Emissionsintensität innerhalb eines voreingestellten Frequenzbereichs mittels eines "Frequenzscans" durchgestimmt werden. Dabei wird die nach einer bestimmten Integrationszeit, die im Bereich von etwa 1 bis 3 Sekunden liegt und abhängig von der jeweils eingestellten Modulationsfrequenz ist, die von der Zone abgegebene bzw. rückgestrahlte thermische Strahlung, die typischerweise im langwelligen Spektralbereich liegt, mittels des Infrarot-Detektors und des Lock-In-Verstärkers aufgezeichnet.

Fig. 2 zeigt ein Flussdiagramm, welches die wesentlichen Verfahrensschritte des erfindungsgemäßen Verfahrens 100 zum Herstellen eines Bauteilelements umfasst. Dabei wird in einem ersten Verfahrensschritt 101 die Zone des Bauteilelements einer Strahlung ausgesetzt, die bevorzugt als Laserstrahlung ausgebildet ist und eine konstante Intensität aufweist, um in der bestrahlten Zone eine mikroskopische Strukturveränderung zu bewirken. Dazu wird typischerweise mit einer hohen Leistung von ungefähr 30 Watt fokussiert auf eine Fläche von etwa 3 mm² eingestrahlt, wobei die Laserstrahlstärke auf maximale Intensität eingestellt wird. In einem daran anschließenden Verfahrensschritt 102 erfolgt eine Abkühlphase, für die typischerweise eine Zeitdauer von etwa 2 bis 4 Minuten gewählt wird. In einem weiteren Verfahrensschritt 103 wird die Zone mit modulierter Strahlung, vorzugsweise mit modulierter Laserstrahlung, und - im Unterschied zu Schritt 101 - mit deutlich reduzierter Leistung bestrahlt und in einem unmittelbar darauf folgenden Verfahrensschritt 104 die daraufhin von der Zone emittierte thermische Strahlung phasenempfindlich detektiert. In einem weiteren Verfahrensschritt 105 wird anhand der Detektion eine Phasenbeziehung zwischen der zur Zone ausgesendeten modulierten Strahlung und der detektierten thermischen Strahlung als Maß für die in Schritt 101 erzielte Strukturveränderung in der Zone 11' ermittelt. Die physikalische Grundlage dafür besteht darin, dass sich durch die mikroskopische Änderung des Gefüges in der bestrahlten Zone infolge der Erhitzung mit einer derartigen Strahlung gemäß Schritt 101 die festkörperphysikalischen Eigenschaften wie die Wärmeleitfähigkeit, die spezifische Wärmekapazität und die Dichte ändern, wobei beim erfindungsgemäße Verfahren zumeist nur die Wärmeleitfähigkeit einen messbaren Beitrag liefert. Um die Phasenbeziehung für eine Vielzahl von N Modulationsfrequenzen innerhalb eines vorbestimmten Frequenzbereichs zu ermitteln, werden die Schritte 103 bis 105 für jeweils eine Modulationsfrequenz ν_{M}(i) wiederholt, wobei i einen Laufindex bezeichnet, der von 1 bis N läuft. Die Modulationsfrequenzen ν_{M}(i) zur Modulation der Strahlungsintensität bzw. Laserintensität liegen dabei innerhalb eines Bereichs von etwa 1 Hz bis 40 kHz. Ergibt sich aus der ermittelten Phasenbeziehung, dass die Gefügeänderung in der bestrahlten Zone noch nicht den erwünschten Grad erreicht hat, so wird der erste Verfahrensschritt 101 wiederholt und die Zone erneut der strukturverändernden Laserstrahlung ausgesetzt, die dazu wiederum auf konstante Intensität und hohe Leistung eingestellt wird. Um beispielsweise die typische Ausgangshärte der Zone eines Stifts 11 von etwa 780 HV (Vickershärte) auf einen Wert von etwa 325 HV zu reduzieren, hat es sich als vorteilhaft erwiesen, die gemäß Verfahrensschritt 101 strukturverändernde Bestrahlung bei einer Dauer von 2 bis 4 Minuten zusammen mit der sich gemäß Verfahrensschritt 102 jeweils daran anschließenden Abkühlphase dreimal zu wiederholen. Indem die Behandlung der Zone durch die strukturverändernde Strahlung gemäß Verfahrensschritt 101 in einer sauerstoffarmen Umgebungsatmosphäre, d.h. bei dafür charakteristischen Sauerstoff-Partialdrücken im Bereich zwischen 10⁻⁶ und 10⁻³ bar, durchgeführt wird, wird auf der erhitzten Zone eine dunkle Oxidschicht ausgebildet, die zusätzlich verschleißmindernd wirkt.

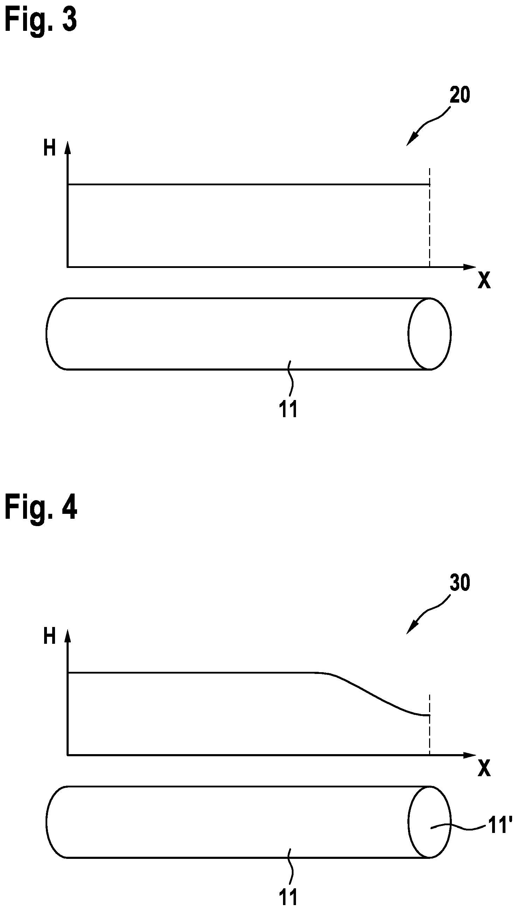

Fig. 3 zeigt ein Schaubild 20 für einen Stift 11 vor Durchführung des erfindungsgemäßen Verfahrens, wobei die Härte H des Stifts 11 gegenüber dessen axialer Längserstreckung x aufgetragen ist, indem auf der Abszisse die axiale Position x des Stifts 11 dargestellt ist. Anhand des konstanten Verlaufs der Messkurve für H entlang der axialen Position des Stifts 11 ist ersichtlich, dass der unbearbeitete Stift 11 eine konstante Härte aufweist.

Fig. 4 zeigt als Resultat des erfindungsgemäßen Verfahrens ein Schaubild 30 für einen gemäß Fig. 1 laserbehandelten Stift 11, bei dem die Härte H gegenüber dessen axialer Längserstreckung x aufgetragen ist. Im Bereich des laserbehandelten Endes 11' fällt - im Unterschied zu dem in Fig. 2 für einen unbehandelten Stift dargestellten Verlauf - die Härte H aufgrund der einwirkenden Laserstrahlung gegenüber einem ansonsten konstanten Verlauf der Härte in den von der Laserstrahlung nicht beeinflussten Bereichen des Stifts 11 stark ab.

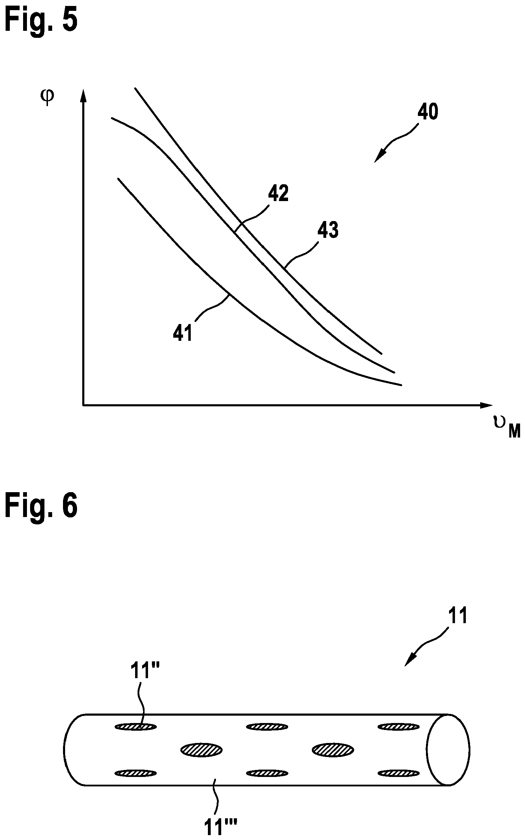

Fig. 5 zeigt ein Schaubild 40, bei dem anhand von drei Messkurven 41, 42, 43 eine jeweilige Phasenbeziehung bzw. ein jeweiliger Phasenwinkel ϕ zwischen dem auf eine Zone 11' eines Werkstücks moduliert einfallenden Messlicht und der in Reaktion darauf aus der Zone 11' rückgestrahlten thermischen Strahlung in funktionaler Abhängigkeit von der jeweils zur Modulation des Messlichts eingestellten Modulationsfrequenz ν_{M} aufgetragen ist, wobei die drei Messkurven 41, 42, 43 an der Zone nach unterschiedlich lange auf die Zone einwirkenden Prozessphasen der strukturverändernden Strahlung mittels des Infrarot-Detektors 18 und des nachgeschalteten Lock-In-Verstärkers 19 aufgenommen sind. Die Messkurve 41 ist an dieser Zone nach einer Prozessphase 101 mit der kürzesten Einwirkdauer der strukturverändernden Strahlung aufgenommen; die mittlere Messkurve 42 ist an dieser Zone nach einer Prozessphase 101 mit einer im Vergleich dazu längeren Einwirkdauer der strukturverändernden Strahlung aufgenommen, während schließlich die Messkurve 43 nach einer Prozessphase 101 mit der längsten Einwirkdauer aufgenommen ist. Die Dauer der Einwirkzeit bestimmt das Ausmaß der mikroskopischen Gefügeänderung in der Zone und mithin deren Härtegrad, d.h. je länger die Einwirkzeit der strukturverändernden Strahlung ist, desto weicher ist die modifizierte Zone. Dies spiegelt sich in den Messkurven 41, 42, 43 wieder, denn diese unterscheiden sich je nach detektiertem Prozesszustand durch unterschiedlichen Phasenwinkelversatz voneinander. So weist die Messkurve 42 im Vergleich zur Messkurve 41 einen insgesamt größeren Phasenwinkel über den gesamten Verlauf der eingestellten Modulationsfrequenzen ν_{M} auf. Im Vergleich zur Messkurve 42 - und somit auch zur Messkurve 41 - weist die Messkurve 43 einen insgesamt größeren Phasenwinkel über alle eingestellten Modulationsfrequenzen ν_{M} auf. Mithin ergibt sich eine Korrelation zwischen der in der Zone erzielten Gefügeänderung durch "Aufweichen" der ursprünglichen Härte und dem gemessenen Phasenverlauf, der den Zustand dieser Zone charakterisiert. Gemäß einem Ausführungsbeispiel kann der Phasenverlauf anhand von Messungen an Referenzproben definierter Härte kalibriert werden. Mithin kann anhand des mittels "Frequenzscans" gewonnenen Phasenverlaufs beurteilt werden, ob eine gewünschte Härte in der behandelten Zone auf der Oberfläche des Bauteilelements erreicht ist.

Fig. 6 zeigt in perspektivischer Darstellung das als Stift ausgebildete Bauteilelement bzw. Werkstück nach der Wärmebehandlung durch an verschiedenen Stellen bzw. Zonen 11"' einwirkende Laserstrahlung. Indem die Laserstrahlung auf verschiedene Zonen des Stifts 11 fokussiert wird, bilden sich dort aufgrund der Gefügeänderung Zonen von niedriger Härte gegenüber den unbehandelten Bereichen 11"' aus.

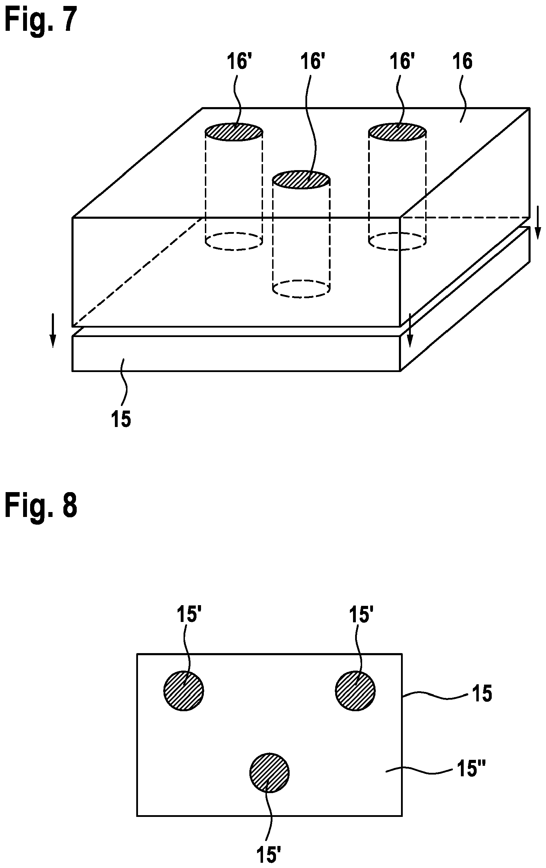

Fig. 7 zeigt ein als Metallplatte 15 ausgebildetes Bauelement bzw. Werkstück und eine unmittelbar darüber angeordnete Maske 16. Die Maske 16 weist Bereiche 16' auf, um einfallende Laserstrahlung zum Werkstück 15 selektiv durchzulassen, während Abschnitte außerhalb dieser Bereiche 16' die einfallende Laserstrahlung blockieren.

Fig. 8 zeigt eine Draufsicht auf die Metallplatte 15 nach Behandlung mit der durch die Zonen 16' der Maske 16 einfallenden Laserstrahlung, wodurch sich entsprechend der geometrischen Anordnung der Bereichen 16' bestrahlte Zonen 15' in der Metallplatte 15 ausbilden, welche eine modifizierte Struktur mit niedriger Härte im Vergleich zu angrenzenden unbestrahlten Bereichen 15" aufweisen. Dadurch ist es möglich, in einem einzigen Verfahrensschritt mehrere "weiche" Zonen auf der Oberfläche eines Bauteilelements zugleich auszubilden.

Zusammenfassend wird bei dem erfindungsgemäßen Verfahren 100, bei dem es sich um ein photothermisches Verfahren handelt und das zum Herstellen eines Bauteilelements dient, zumindest eine Zone 11' des Bauteilelements 11 modifiziert, indem die Zone 11' selektiv einer Strahlung gemäß Schritt 101 ausgesetzt wird, um eine Strukturveränderung der Zone 11' zu bewirken, und wird ein Prozesszustand der Zone messtechnisch erfasst, indem gemäß der Schritte 103 und 104 die Zone 11' mit modulierter Strahlung bestrahlt und daraufhin von der Zone abgegebene thermische Strahlung 17 phasenempfindlich detektiert wird, wobei gemäß Schritt 105 eine Phasenbeziehung zwischen eingestrahlter modulierter Strahlung und detektierter thermischer Strahlung als Maß für die Strukturveränderung der Zone 11' ermittelt wird. Dabei wird die der Strukturveränderung dienende Strahlung für eine vorbestimmte Zeitdauer aufrechterhalten, worauf eine Abkühlphase von vorbestimmter Zeitdauer erfolgt, nach deren Ende typischerweise die messtechnische Erfassung der Strukturveränderung durchgeführt wird. Alternativ ist es jedoch auch möglich, die messtechnische Erfassung schon während der Abkühlphase durchzuführen. Mit dem erfindungsgemäßen Verfahren lässt sich vorteilhaft der Verschleiß von Bauteilelementen, die unterschiedlich beanspruchte Tribozonen aufweisen, durch gezielte und lokale Anpassung des mikroskopischen Gefüges in einer derartigen Zone reduzieren. Vorteilhaft ermöglicht das erfindungsgemäße Verfahren eine "in-situ"-Charakterisierung der erfindungsgemäß behandelten Zone des Bauteilelements, da die bearbeitenden und die prozessmesstechnischen Prozessschritte zusammenhängend ablaufen können.

Eine Ausführungsform der Erfindung kann darin bestehen, dass die messtechnische Erfassung auch während der Einwirkungsdauer der strukturverändernden Strahlung durchgeführt wird, in dem beispielsweise für beide Strahlungsarten, d.h. für die strukturverändernde Strahlung wie auch für die zur messtechnischen Erfassung dienende Strahlung eine einzige Laserdiode verwendet wird, welche jedoch so betrieben wird, dass sie - zur Strukturveränderung - Licht mit einer konstanten und hohen Lichtintensität abgibt, dem - zum Messen - eine Modulation von niedrigerer Intensität überlagert ist, so dass der Lock-In-Verstärker eine Änderung des Signals und mithin einen Phasenversatz registrieren kann, um "online" eine Strukturveränderung zu erfassen.

## Patentansprüche

1. Verfahren zum Herstellen eines Bauteilelements, insbesondere für ein Kraftstoffeinspritzsystem, wobei zumindest eine Zone (11') des Bauteilelements (11) modifiziert wird, indem die Zone selektiv einer Strahlung ausgesetzt wird (101), um eine Strukturveränderung der Zone (11') zu erzielen, wobei der Prozesszustand der Zone (11') messtechnisch erfasst wird, indem mit modulierter Strahlung die Zone (11') bestrahlt und daraufhin von der Zone (11') abgegebene thermische Strahlung (17) phasenempfindlich detektiert wird (104), wobei eine Phasenbeziehung zwischen eingestrahlter modulierter Strahlung und detektierter thermischer Strahlung als Maß für den Prozesszustand der Zone ermittelt wird (105) , wobei die modulierte Strahlung in einem vorbestimmten Modulationsfrequenzbereich verändert wird, und wobei die Intensität der Strahlung nacheinander mit jeweils einer Modulationsfrequenz moduliert wird, um bei jeder Modulationsfrequenz eine Phasendifferenz zwischen einfallender modulierter Strahlung und von der Zone abgegebener thermischer Strahlung in Abhängigkeit von der jeweiligen Modulationsfrequenz zu ermitteln.

2. Verfahren nach Anspruch 1, **dadurch gekennzeichnet, dass** die Modulationsfrequenz in diskreten Schritten innerhalb des vorbestimmten Modulationsfrequenzbereichs verändert wird.

3. Verfahren nach Anspruch 1 oder 2, **dadurch gekennzeichnet, dass** der vorbestimmte Modulationsfrequenzbereich zwischen 1 Hz bis 40 kHz liegt.

4. Verfahren nach einem der vorherigen Ansprüche, **dadurch gekennzeichnet, dass** die der Strukturveränderung dienende Strahlung für eine vorbestimmte Zeitdauer aufrechterhalten wird und darauf eine Abkühlphase von vorbestimmter Zeitdauer erfolgt.

5. Verfahren nach Anspruch 4, **dadurch gekennzeichnet, dass** nach Ende der Abkühlphase die messtechnische Erfassung der Strukturveränderung durchgeführt wird.

6. Verfahren nach Anspruch 4, **dadurch gekennzeichnet, dass** die messtechnische Erfassung der Strukturveränderung während der Einwirkungsdauer der zur Strukturveränderung bestimmten Strahlung durchgeführt wird.

7. Verfahren nach einem der Ansprüche 4 bis 6, **dadurch gekennzeichnet, dass** während der Abkühlphase die Leistung der zur Strukturveränderung dienenden Strahlung langsam abgeschwächt wird.

8. Verfahren nach einem der Ansprüche 4 bis 7, **dadurch gekennzeichnet, dass** die vorbestimmte Zeitdauer der Abkühlphase im Bereich zwischen 2 bis 5 Minuten liegt.

9. Verfahren nach einem der vorherigen Ansprüche, **dadurch gekennzeichnet, dass** die zur Strukturveränderung dienende Strahlung mit einer konstanten Intensität abgestrahlt wird.

10. Verfahren nach einem der Ansprüche 1 bis 8, **dadurch gekennzeichnet, dass** die zur Strukturveränderung dienende Strahlung gepulst abgestrahlt wird.

11. Verfahren nach einem der vorherigen Ansprüche, **dadurch gekennzeichnet, dass** das Bauteilelement zumindest während der Behandlung durch die strukturverändernde Strahlung einer sauerstoffarmen Atmosphäre ausgesetzt wird.

12. Verfahren nach einem der vorherigen Ansprüche, **dadurch gekennzeichnet, dass** für die strukturverändernde Strahlung und für die modulierte Strahlung Laserstrahlung eingesetzt wird.

13. Verfahren nach Anspruch 12, **dadurch gekennzeichnet, dass** Laserstrahlung im sichtbaren Wellenlängenbereich verwendet wird.

14. Vorrichtung zum Durchführen des Verfahrens nach einem der vorherigen Ansprüche mit:
- Mitteln zum Abstrahlen einer strukturverändernden Strahlung,
- Mitteln zum Abstrahlen einer zum Messen dienenden modulierten Strahlung,
- Detektionsmitteln (18, 19), um selektiv von einer Zone des Bauteilelements abgegebene thermische Strahlung in Reaktion auf moduliert einfallende Strahlung phasenempfindlich zu detektieren,
- Mitteln zum Verändern der modulierten Strahlung in einem vorbestimmten Modulationsfrequenzbereich, wobei die Intensität der Strahlung nacheinander mit jeweils einer Modulationsfrequenz moduliert wird, und
- Auswertemitteln zum Ermitteln einer Phasenbeziehung zwischen moduliert eingestrahlter Strahlung und detektierter thermischer Strahlung als Maß für den Prozesszustand der Zone, um bei jeder Modulationsfrequenz eine Phasendifferenz zwischen einfallender modulierter Strahlung und von der Zone abgegebener thermischer Strahlung in Abhängigkeit von der jeweiligen Modulationsfrequenz zu ermitteln.

15. Vorrichtung nach Anspruch 14, **dadurch gekennzeichnet, dass** die Mittel zum Abstrahlen einer strukturverändernden Strahlung und/oder die Mittel zum Abstrahlen einer zum Messen dienenden modulierten Strahlung als Laser (13"), vorzugsweise als Laserdiode, ausgebildet sind.

16. Vorrichtung nach Anspruch 14 oder 15, **dadurch gekennzeichnet, dass** die Detektionsmittel einen infrarotempfindlichen Detektor (18) umfassen, um von dem Bauteilelement (11) abgegebene thermische Strahlung (17) zu erfassen.

17. Vorrichtung nach Anspruch 16, **dadurch gekennzeichnet, dass** die Detektionsmittel einen Lock-In-Verstärker (19) umfassen, der dem infrarotempfindlichen Detektor (18) nachgeschaltet ist, um dessen Ausgangssignale im Vergleich zur modulierten Strahlung phasenempfindlich zu verarbeiten.

18. Vorrichtung nach einem der Ansprüche 14 bis 17, **dadurch gekennzeichnet, dass** Mittel (12) zum Kühlen des Bauteilelements (11) vorgesehen sind.

19. Vorrichtung nach einem der Ansprüche 14 bis 18, **dadurch gekennzeichnet, dass** eine Maske (16) vorgesehen ist, die zwischen Bauteilelement und einer zum Abstrahlen der strukturverändernden Strahlung vorgesehenen Strahlungsquelle (13") angeordnet ist und wenigstens einen die von der Strahlungsquelle emittierte Strahlung transmittierenden Bereich (16') und wenigstens einen die Strahlung sperrenden Bereich aufweist.

## Claims

1. Method for producing a component element, in particular for a fuel injection system, wherein at least one zone (11') of the component element (11) is modified by virtue of this zone being selectively exposed to radiation (101) in order to obtain a structural change of the zone (11'), wherein the process state of the zone (11') is detected in metrological fashion by virtue of the zone (11') being irradiated with modulated radiation and the thermal radiation (17) subsequently emitted by the zone (11') being detected in phase-sensitive fashion (104), wherein a phase relationship between modulated radiation radiated-in and detected thermal radiation is ascertained as a measure for the process state of the zone (105), wherein the modulated radiation is altered in a predetermined modulation frequency range and wherein the intensity of the radiation is successively modulated with a modulation frequency in each case in order to ascertain, for each modulation frequency, a phase difference between the incident modulated radiation and the thermal radiation emitted by the zone as a function of the respective modulation frequency.

2. Method according to Claim 1, **characterized in that** the modulation frequency is altered in discrete steps within the predetermined modulation frequency range.

3. Method according to Claim 1 or 2, **characterized in that** the predetermined modulation frequency range lies between 1 Hz and 40 kHz.

4. Method according to any one of the preceding claims, **characterized in that** the radiation serving to alter the structure is maintained for a predetermined duration and this is followed by a cooling phase with a predetermined duration.

5. Method according to Claim 4, **characterized in that** the metrology-based capture of the structural change is carried out after the end of the cooling phase.

6. Method according to Claim 4, **characterized in that** the metrology-based capture of the structural change is carried out during the exposure time of the radiation determined for the structural change.

7. Method according to any one of Claims 4 to 6, **characterized in that** the power of the radiation serving to alter the structure is slowly attenuated during the cooling phase.

8. Method according to any one of Claims 4 to 7, **characterized in that** the predetermined duration of the cooling phase lies in the range of 2 to 5 minutes.

9. Method according to any one of the preceding claims, **characterized in that** the radiation serving to alter the structure is emitted with a constant intensity.

10. Method according to any one of Claims 1 to 8, **characterized in that** the radiation serving to alter the structure is emitted in pulsed fashion.

11. Method according to any one of the preceding claims, **characterized in that** the component part is exposed to low-oxygen atmosphere, at least during the treatment by the structure-altering radiation.

12. Method according to any one of the preceding claims, **characterized in that** laser radiation is used for the structure-altering radiation and for the modulated radiation.

13. Method according to Claim 12, **characterized in that** laser radiation in the visible wavelength range is used.

14. Apparatus for carrying out the method according to any one of the preceding claims, comprising:
- means for emitting structure-altering radiation,
- means for emitting a modulated radiation serving measurement purposes,
- detection means (18, 19) for selectively detecting, in phase-sensitive fashion, thermal radiation emitted by a zone of the component element in response to radiation incident in modulated fashion,
- means for altering the modulated radiation in a predetermined modulation frequency range, wherein the intensity of the radiation is successively modulated with respectively one modulation frequency, and
- evaluation means for ascertaining a phase relationship between modulated radiation radiated-in and detected thermal radiation as a measure for the process state of the zone in order to ascertain, for each modulation frequency, a phase difference between the incident modulated radiation and the thermal radiation emitted by the zone as a function of the respective modulation frequency.

15. Apparatus according to Claim 14, **characterized in that** the means for emitting structure-altering radiation and/or the means for emitting modulated radiation serving measurement purposes are embodied as a laser (13"), preferably as a laser diode.

16. Apparatus according to Claim 14 or 15, **characterized in that** the detection means comprise an infrared-sensitive detector (18) in order to capture thermal radiation (17) emitted by the component element (11).

17. Apparatus according to Claim 16, **characterized in that** the detection means comprise a lock-in amplifier (19) connected downstream of the infrared-sensitive detector (18) in order to process output signals of the latter in phase-sensitive fashion in comparison with the modulated radiation.

18. Apparatus according to any one of Claims 14 to 17, **characterized in that** means (12) for cooling the component element (11) are provided.

19. Apparatus according to any one of Claims 14 to 18, **characterized in that** a mask (16) is provided, the latter being arranged between component element and a radiation source (13") provided for emitting the structure-altering radiation and having at least one region (16') that transmits the radiation emitted by the radiation source and at least one region that blocks the radiation.

## Revendications

1. Procédé de fabrication d'un élément de composant, notamment pour un système d'injection de carburant, au moins une zone (11') de l'élément de composant (11) étant modifiée en exposant (101) sélectivement la zone à un rayonnement afin d'obtenir une modification structurelle de la zone (11'), l'état du processus de la zone (11') étant détecté de manière métrologique en irradiant la zone (11') avec un rayonnement modulé et ensuite en détectant (104) avec sensibilité de phase le rayonnement thermique (17) délivré par la zone (11'), une relation de phase entre le rayonnement modulé incident et le rayonnement thermique détecté étant identifiée (105) comme une mesure de l'état du processus de la zone, le rayonnement modulé étant modifié dans une plage de fréquences de modulation prédéterminée et l'intensité du rayonnement étant modulée successivement respectivement avec une fréquence de modulation afin d'identifier, à chaque fréquence de modulation, une différence de phase entre le rayonnement modulé incident et le rayonnement thermique délivré par la zone en fonction de la fréquence de modulation respective.

2. Procédé selon la revendication 1, **caractérisé en ce que** la fréquence de modulation est modifiée par pas discrets au sein d'une plage de fréquences de modulation prédéterminée.

3. Procédé selon la revendication 1 ou 2, **caractérisé en ce que** la plage de fréquences de modulation prédéterminée est comprise entre 1 Hz et 40 kHz.

4. Procédé selon l'une des revendications précédentes, **caractérisé en ce que** le rayonnement servant à la modification structurelle est maintenu pendant une durée prédéterminée et il est suivi par une phase de refroidissement ayant une durée prédéterminée.

5. Procédé selon la revendication 4, **caractérisé en ce que** l'acquisition métrologique de la modification structurelle est effectuée après la fin de la phase de refroidissement.

6. Procédé selon la revendication 4, **caractérisé en ce que** l'acquisition métrologique de la modification structurelle est effectuée pendant la durée de l'action du rayonnement conçu pour la modification structurelle.

7. Procédé selon l'une des revendications 4 à 6, **caractérisé en ce que** pendant la phase de refroidissement, la puissance du rayonnement servant à la modification structurelle est lentement affaiblie.

8. Procédé selon l'une des revendications 4 à 7, **caractérisé en ce que** la durée prédéterminée est comprise dans la plage entre 2 et 5 minutes.

9. Procédé selon l'une des revendications précédentes, **caractérisé en ce que** le rayonnement servant à la modification structurelle est émis avec une intensité constante.

10. Procédé selon l'une des revendications 1 à 8, **caractérisé en ce que** le rayonnement servant à la modification structurelle est émis de manière pulsée.

11. Procédé selon l'une des revendications précédentes, **caractérisé en ce que** l'élément de composant est exposé à une atmosphère pauvre en oxygène au moins pendant le traitement par le rayonnement modifiant la structure.

12. Procédé selon l'une des revendications précédentes, **caractérisé en ce qu'**un rayonnement laser est utilisé pour le rayonnement modifiant la structure et pour le rayonnement modulé.

13. Procédé selon la revendication 12, **caractérisé en ce que** le rayonnement laser est utilisé dans la plage de lumière visible.

14. Dispositif pour mettre en œuvre le procédé selon l'une des revendications précédentes, comprenant :
- des moyens destinés à émettre un rayonnement modifiant la structure,
- des moyens destinés à émettre un rayonnement modulé servant à la mesure,
- des moyens de détection (18, 19) destinés à détecter sélectivement avec sensibilité de phase un rayonnement thermique délivré par une zone de l'élément de composant en réaction au rayonnement incident modulé,
- des moyens pour modifier le rayonnement modulé dans une plage de fréquences de modulation prédéterminée, l'intensité du rayonnement étant modulée successivement respectivement avec une fréquence de modulation, et
- des moyens d'interprétation destinés à identifier une relation de phase entre le rayonnement modulé incident et le rayonnement thermique détecté comme une mesure de l'état du processus de la zone, afin d'identifier à chaque fréquence de modulation une différence de phase entre le rayonnement modulé incident et le rayonnement thermique délivré par la zone en fonction de la fréquence de modulation respective.

15. Dispositif selon la revendication 14, **caractérisé en ce que** les moyens destinés à émettre un rayonnement modifiant la structure et/ou les moyens destinés à émettre un rayonnement modulé servant à la mesure sont réalisés sous la forme d'un laser (13"), de préférence sous la forme d'une diode laser.

16. Dispositif selon la revendication 14 ou 15, **caractérisé en ce que** les moyens de détection comportent un détecteur sensible aux infrarouges (18) afin de détecter le rayonnement thermique (17) délivré par l'élément de composant (11).

17. Dispositif selon la revendication 16, **caractérisé en ce que** les moyens de détection comportent un amplificateur à verrouillage (19) qui est branché à la suite du détecteur sensible aux infrarouges (18) afin de traiter ses signaux de sortie avec sensibilité de phase en comparaison avec le rayonnement modulé.

18. Dispositif selon l'une des revendications 14 à 17, **caractérisé en ce que** des moyens (12) de refroidissement de l'élément de composant (11) sont présents.

19. Dispositif selon l'une des revendications 14 à 18, **caractérisé en ce qu'**un masque (16) est présent, lequel est disposé entre l'élément de composant et une source de rayonnement (13") conçue pour émettre le rayonnement modifiant la structure et possède au moins une zone (16') qui transmet le rayonnement émis par la source de rayonnement et au moins une zone bloquant le rayonnement.
